Europäisches Patentamt

European Patent Office

Office européen des brevets

(19)

(11) Veröffentlichungsnummer: **0 076 435**
**A1**

## (12) EUROPÄISCHE PATENTANMELDUNG

(21) Anmeldenummer: **82108817.6**

(22) Anmeldetag: **23.09.82**

(51) Int. Cl.³: **G 03 B 37/00**
**G 21 C 17/00**

(30) Priorität: **06.10.81 DE 3139692**

(43) Veröffentlichungstag der Anmeldung:
**13.04.83 Patentblatt 83/15**

(84) Benannte Vertragsstaaten:
**CH FR GB IT LI NL SE**

(71) Anmelder: **KRAFTWERK UNION**
**AKTIENGESELLSCHAFT**
**Wiesenstrasse 35**
**D-4330 Mülheim (Ruhr)(DE)**

(72) Erfinder: **Weber, Robert**
**Esperstrasse 23**
**D-8521 Uttenreuth(DE)**

(72) Erfinder: **Förner, Siegfried**
**Leipziger Strasse 69**
**D-8520 Erlangen(DE)**

(74) Vertreter: **Mehl, Ernst, Dipl.-Ing. et al,**
**Postfach 22 01 76**
**D-8000 München 22(DE)**

(54) Geräteträger, insbesondere Rohrrinnen-Manipulator.

(57) Mit Prüf-, Meß- und/oder Bearbeitungsgeräten versehener Geräteträger (M), der durch das Innere von Behältern oder Rohrleitungen (R) von außen unsichtbar transportierbar und in der jeweiligen Arbeitsposition arretierbar ist, insbesondere Rohrrinnen-Manipulator zur Wand- und Schweißnaht-Kontrolle und -Bearbeitung von innen, wobei die an mindestens einem Arbeitskopf (K) gelagerten Geräte (5, TV) in Umfangs- und/oder in axialer Richtung längs definierter Vorschubbahnen bewegbar sind. Am Arbeitskopf (K) ist etwa im Bereich der Rohr- bzw. Behälterachse (RO) eine Panorama-Aufnahmekamera (PK) angeordnet, bestehend aus einem feststehenden Kamerateil (8), der an Halteflächen des Arbeitskopfes (K) befestigt ist und den Kamera-Drehantriebsmotor mit Getriebe enthält, sowie bestehend aus einem umlaufenden Kamerateil mit Objektiv, Beleuchtungseinrichtung, Film und Filmtransport. Mit der Aufnahmekamera lassen sich Rundum-Fotoprotokolle der Rohrinnenwand, z.B. von Schweißnähten vor und nach dem Beschleifen, erstellen.

FIG 1

0076435

KRAFTWERK UNION AKTIENGESELLSCHAFT    Unser Zeichen
VPA 81 P 9 2 5 6 E

Geräteträger, insbesondere Rohrinnen-Manipulator

Die Erfindung bezieht sich auf einen mit Prüf-, Meß- und/oder Bearbeitungsgeräten versehenen Geräteträger, der durch das Innere von Behältern oder Rohrleitungen von außen unsichtbar transportierbar und in der jeweiligen Arbeitsposition arretierbar ist, insbesondere auf einen Rohrinnen-Manipulator zur Wand- und Schweißnaht-Kontrolle und -bearbeitung von innen gemäß Oberbegriff des Anspruchs 1.

Ein solcher Geräteträger ist z.B. in der älteren Anmeldung P 31 11 814.3 näher beschrieben. Solche Geräteträger haben große Bedeutung zur Innen-Kontrolle und -bearbeitung von Rohrleitungen. So kann man mit ihnen schleifen, schweißen, ultraschall-prüfen, wirbelstromprüfen, isotopen-prüfen, innenplattieren, mittels Fernsehsystemen inspizieren, um einige wichtige Anwendungsfälle zu nennen.

Wenn z.B. Schweiß-, Schleif- oder Plattierungs-Operationen ausgeführt sind, so besteht das Bedürfnis, den bearbeiteten Bereich nicht nur zu betrachten, sondern auch eine Protokollunterlage in Form einer fotografischen Aufnahme zu erhalten. Ein solches "Foto-Protokoll" kann auch erwünscht sein, bevor der eigentliche Prüf-, Meß- oder Bearbeitungsvorgang ausgeführt wird. Man könnte zwar die am Bearbeitungskopf normalerweise angebrachte Fernsehkamera im interessierenden Bereich einmal herumführen und die Aufnahmen mit einem Video-Gerät aufzeichnen. Solche Aufnahmen genügen aber im

Bu 2 Po/05.10.1981

allgemeinen hinsichtlich Schärfe und Feinstruktur
den gestellten Anforderungen eines "Foto-Protokolls"
nicht.

Der Erfindung liegt die Aufgabe zugrunde, hier eine
Abhilfe zu schaffen und dem Geräteträger eine Aufnahmekamera-Einrichtung zuzuordnen, welche einwandfreie
"Foto-Protokolle" von den interessierenden Bereichen
der Rohrrinnenwand liefert. Es sollen dabei die Operationen des Arbeitskopfes durch die Aufnahmeeinrichtung
und umgekehrt nicht behindert sein.

Erfindungsgemäß wird die gestellte Aufgabe dadurch
gelöst, daß am Arbeitskopf des Geräteträgers etwa
im Bereich der Rohr- bzw. Behälterachse eine Panorama-
Aufnahmekamera angeordnet ist, bestehend aus einem
feststehenden Kamerateil, der an Halteflächen des
Arbeitskopfes befestigt ist und den Kamera-Drehantriebsmotor mit Getriebe enthält, sowie bestehend aus einem
umlaufenden Kamerateil mit Objektiv, Beleuchtungseinrichtung, Film und Filmtransport.

Vorteilhafte Weiterbildungen sind in den Unteransprüchen
2 bis 5 beschrieben. Die mit der Erfindung erzielbaren
Vorteile sind vor allem darin zu sehen, daß die Panorama-Aufnahmekamera sich sehr einfach frontseitig am
Arbeitskopf des Geräteträgers befestigen läßt, so daß
sich mit einem einmaligen Einfahren des Geräteträgers
in das Rohrinnere (bzw. allgemein Behälterinnere) sowohl vor einem Prüf- oder Bearbeitungsvorgang als auch
danach eine Panorama-Aufnahme des gesamten Rohrrinnen-
umfanges anfertigen läßt. Dabei wird bevorzugt eine
Aufnahmekamera des Typs verwendet, wie sie in der DE-AS 24 11 537 beschrieben ist, d.h. eine Kamera, welche sich auch über einen Umfangswinkel von größer als 360° schwenken und in diesem Bereich für Aufnahmen verwenden läßt, so daß sich Filmanfang und -ende überlappen.

Im folgenden wird anhand der Zeichnung, in der ein Ausführungsbeispiel dargestellt ist, die Erfindung noch näher erläutert. Darin zeigt:

Fig. 1 einen Rohrinnen-Manipulator innerhalb einer Rohrleitung, zum Teil im Schnitt mit einer Panorama-Aufnahmekamera an der Frontseite seines Arbeitskopfes;

Fig. 2 perspektivisch die Außenansicht einer geeigneten Aufnahmekamera.

Innerhalb der S-förmig gekrümmten Rohrleitungspartie R eines Kraftwerkes, insbesondere Kernkraftwerkes, mit den über eine umlaufende Schweißnaht 1 verbundenen Rohrleitungsschüssen r1, r2 befindet sich der Geräteträger M, welcher zur Ausführung von Prüf-, Meß- und/oder Bearbeitungsoperationen vom Innern der Rohrleitung R aus dient und dazu mit entsprechenden Geräten versehen ist. Er kann deshalb auch als Rohrinnen-Manipulator bezeichnet werden, welcher zur Wand- und Schweißnaht-Kontrolle und -bearbeitung von innen dient. Grundsätzlich läßt sich ein solcher Geräteträger auch für langgestreckte Behälter verwenden. Wesentlich ist, daß ein solcher Geräteträger von außen unsichtbar durch das Rohrinnere transportierbar und in der jeweiligen Arbeitsposition arretierbar ist. Er weist hierzu eine Arbeitseinheit m2 und eine Vorschubeinheit m1 auf. Beide Einheiten sind über ein Zwischenglied m3 mittels der beiden kardanischen Gelenke g1, g2 miteinander
gekoppelt, so daß der Geräteträger auch Rohrkrümmungen
durchfahren kann.

Die Vorschubeinheit m1 weist einen achsnormalen Stützflansch f1 mit pneumatisch ausfahrbaren Klemmkörpern 2
und Führungsrollen 3 an seinem äußeren Umfang auf,
ferner einen Schreitzylinder C1 mit darin axial verschiebbarem Schreitkolben C2, wobei der Schreitzylinder
mit dem Stützflansch f1 fest verbunden und der Schreitkolben C2 mit seiner Kolbenstange an dem Zwischenglied
m3 bei g1 angelenkt ist. An die Vorschubeinheit ist
ein Strang von Versorgungsleitungen 4 herangeführt;
es handelt sich dabei um elektrische, pneumatische
Kraft- und Steuerleitungen, ferner können Wasserleitungen zu Kühl- und Spülzwecken vorgesehen sein. Ein in
Axialabstand zum ersten Stützflansch f1 angeordneter
und den Kranz mit den Führungsrollen 3 abstützender
zweiter Stützflansch ist f2 bezeichnet.

Zwischen den beiden achsnormalen Stützflanschen f3 und
f4 der Arbeitseinheit m2 ist der Arbeitskopf K gelagert,
welcher im dargestellten Beispiel ein Schleifaggregat
5 mit Fernsehkamera TV aufweist, wobei das Schleifaggregat mit der Fernsehkamera umlaufend an einem
U-förmigen Bügel 6 an entsprechenden Drehlagern im
Zentrum der Stützflansche f3, f4 gelagert ist, die
Motore zum Drehvorschub des Schleifaggregates und zum
Einschwenken seiner Schleifscheibe gegen die Rohrnaht sind der Einfachheit halber nicht dargestellt.
Pneumatisch ausfahrbare Klemmfüße und Führungsrollen
am Außenumfang der Stützflansche f3, f4 sind wieder mit
2 bzw. 3 bezeichnet.

Wenn die rechte Seite des Schreitkolbens C2 mit Druckluft beaufschlagt wird, dann bewegt sich (bei arretierter Vorschubeinheit m1, dagegen bei eingefahrenen Klemmkörpern 2 bei der Arbeitseinheit m2) letztere mit dem Schreitkolben nach links. Ist die Arbeitseinheit m2 arretiert und die Klemmverbindung bei der Vorschubeinheit m1 außer Eingriff gebracht, dann bewegt sich bei Druckbeaufschlagung der linken Schreitkolbenseite die Vorschubeinheit nach links. Auf diese Weise kann der Geräteträger im Rohrinneren um beliebig viele Kolbenhübe oder auch Teilkolbenhübe nach links, d.h. rohraufwärts, fortschreiten, jedoch auch zum Herausnehmen des Geräteträgers in der anderen Richtung bewegt werden. Der Geräteträger zentriert sich dabei selbsttätig auf Rohrmitte RO.

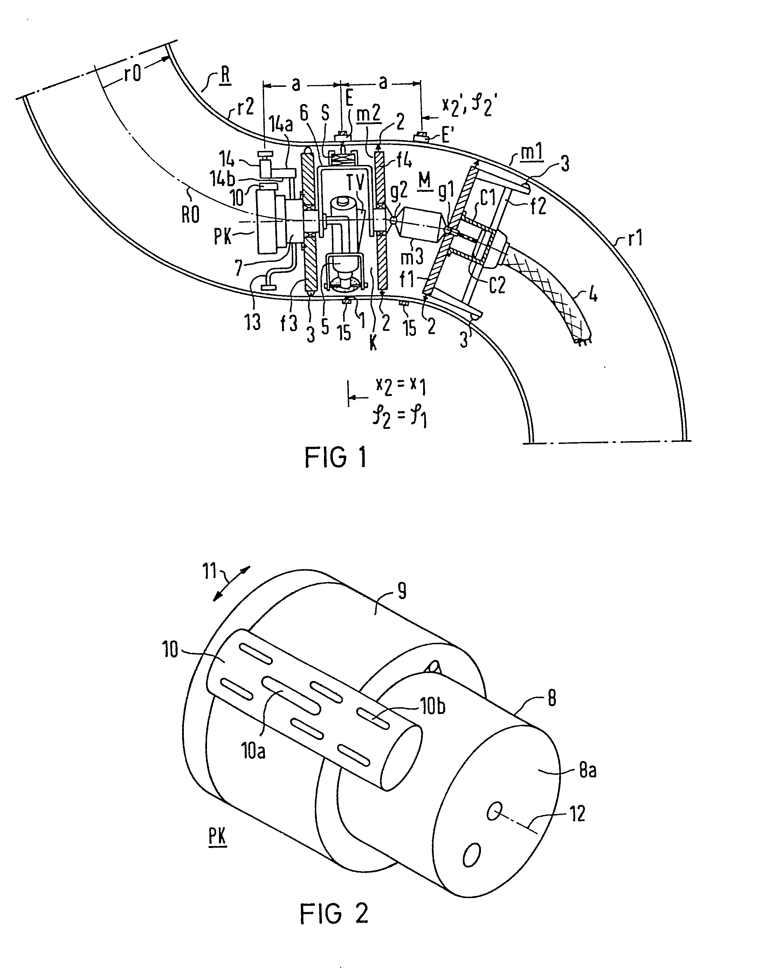

An der Frontseite der Arbeitseinheit m2 bzw. des Arbeitskopfes K ist an der Stirnseite des Stützflansches f3 über einen angeflanschten Stützkörper 7 im wesentlichen im Bereich der Rohrachse RO eine Panorama-Aufnahmekamera PK angeordnet. Diese besteht aus einem feststehenden Kamerateil 8 (siehe auch Fig. 2), welcher mit seiner Befestigungsfläche 8a an dem Stützkörper 7 befestigt ist und den (nicht ersichtlichen) Kamera-Drehantriebsmotor mit Getriebe enthält. Die Kamera PK besteht weiterhin aus dem im Durchmesser zum feststehenden Teil 8 etwas größeren, jedoch gleichfalls zylindrischen umlaufenden Teil 9 mit einem angebauten Gehäuse 10 für einen Objektivschlitz 10a und mehreren um diesen gruppierten Beleuchtungsschlitzen 10b. Im Inneren des umlaufenden Teils 9 befindet sich unter anderem der Film und der Filmtransport. Wie es der Pfeil 11 andeutet, kann der umlaufende Teil 9 in beiden Drehrichtungen relativ zum feststehenden Teil gedreht werden, dabei wird der Film im Inneren zwangsweise weitertransportiert, steht jedoch relativ zu dem durch den Objektivschlitz 10a auf den Film geworfenen Bild still. Die Drehachse, um die der umlaufende Teil 9 umläuft, ist mit 12 bezeichnet. Eine solche Panorama-Aufnahmekamera ist z.B. in der DE-AS 24 11 537 näher erläutert, so daß von einer detaillierten Beschreibung hier abgesehen werden kann.

Zur Positionierung der Kamera PK bzw. zur Positionskontrolle bezüglich der aufzunehmenden inneren Wandbereiche dient, siehe Fig. 1, ein Lichtleiter-Endoskop 13, das mit seinem S-förmigen Arm, d.h. mit dem radial verlaufenden Fußteil desselben, innerhalb des Stützkörpers schwenkbar gelagert ist, so daß es in die (dargestellte) Beobachtungsposition herausgeschwenkt oder in eine Ruheposition zurückgeschwenkt werden kann, in welcher es nicht mehr im Strahlenbereich des Kamera-Objektivs 10 ist. Anstelle von oder zusätzlich zum Lichtleiter-Endoskop 13 kann weiterhin eine Fernsehkamera 14 vorgesehen sein, welche mit einem im wesentlichen axial verlaufenden Armteil 14a um einen im wesentlichen radial verlaufenden Armteil 14b ähnlich wie das Endoskop 13 in Beobachtungsposition bzw. Ruheposition verschwenkt werden kann, wobei der radiale Armteil 14b wiederum im Stützkörper 7 gelagert ist. Die Schwenkbewegungen der Geräte 13 und 14 können fernbedient ausgeführt werden.

Eine weitere zusätzliche Positioniermöglichkeit besteht darin, daß ein Körperschall-, insbesondere Ultraschall-Positioniergerät, das zur Positionierung des Arbeitskopfes K dient, auch zur Positionierung der Kamera PK verwendet wird. Dabei ist außen auf dem Schenkelverbindungssteg des U-förmigen Bügels 6 ein Körperschall-
Geber bzw. -Sender S in Form eines elektrodynamischen
Systems mit Stahlstift angebracht, wobei der Stahlstift
federelastisch gegen die Innenwand gedrückt und
periodisch zu Schwingungen angeregt wird. In der axialen
und tangentialen Sollposition ist außen auf dem Rohr R
ein Schall- insbesondere Ultraschall-Empfänger E mit
einem Spannband 15 angebracht. Die Sollposition ist
dabei die Nahtposition (Rohrnaht 1), wobei diese Sollposition durch die Axial und Umfangs-Koordinaten $x_2$,
$\varphi_2$ definiert ist. In der dargestellten Lage des Geräteträgers M ist dieser bereits in die Sollposition verfahren worden, d.h. er ist solange axial in Richtung
RO und anschließend in Umfangsrichtung verschoben worden, bis das Signal im Schallempfänger E zu einem
Maximum wurde, was gleichbedeutend ist damit, daß sich
der Schallsender S und der Empfänger E beidseits der
Rohrwand einander gegenüberstehen (die Ortskoordinaten
$x_1$, $\varphi_1$ des Senders S sind damit gleich den Ortskoordinaten $x_2$, $\varphi_2$ des Empfängers). Wenn man annimmt, daß
der Axialabstand des Objektivs 10 der Kamera PK zum
Schallsender a ist, dann könnte man die Kamera PK
z.B. auch dadurch auf die Nahtposition 1 ausrichten,
daß man eine Sollposition durch einen Empfänger E'
an der Stelle $x_{2'}$, $\varphi_{2'}$ im Abstand a von der Nahtposition
1 anbringt und dann den Geräteträger M zunächst axial
und dann in Umfangsrichtung solange verfährt, bis das
dem Ultraschall analoge elektrische Signal des Empfängers E' ein Maximum hat. Dann befindet sich das Objektiv 10 in der Radialebene der Nahtposition.

Es kann vorteilhaft sein, das Lichtleiter-Endoskop 13 und die Fernsehkamera 14 nicht nur heraus- und hereinklappbar zu lagern, sondern auch in Umfangsrichtung drehbar, wozu ein entsprechender Drehkranz am Außenumfang des Stützkörpers 7 oder eine Lagerung am umlaufenden Teil 9 der Kamera PK vorzusehen wäre.

2 Figuren
5 Patentansprüche

Patentansprüche

1. Mit Prüf-, Meß- und/oder Bearbeitungsgeräten versehener Geräteträger, der durch das Innere von Behältern oder Rohrleitungen von außen unsichtbar transportierbar und in der jeweiligen Arbeitsposition arretierbar ist, insbesondere Rohrinnen-Manipulator zur Wand- und Schweißnaht-Kontrolle und -Bearbeitung von innen, wobei die an mindestens einem Arbeitskopf gelagerten Geräte in Umfangs- und/oder in axialer Richtung längs definierter Vorschubbahnen bewegbar sind, d a d u r c h   g e k e n n z e i c h n e t , daß am Arbeitskopf etwa im Bereich der Rohr- bzw. Behälterachse eine Panorama-Aufnahmekamera angeordnet ist, bestehend aus einem feststehenden Kamerateil, der an Halteflächen des Arbeitskopfes befestigt ist und den Kamera-Drehantriebsmotor mit Getriebe enthält, sowie bestehend aus einem umlaufenden Kamerateil mit Objektiv, Beleuchtungseinrichtung, Film und Filmtransport.

2. Geräteträger nach Anspruch 1, d a d u r c h   g e k e n n  z e i c h n e t , daß zur Positionierung oder Positionskontrolle der Aufnahmekamera bezüglich des aufzunehmenden inneren Wandbereiches ein in die Objektivachse schwenkbares Bildübertragungsgerät an Halteflächen des Arbeitskopfes befestigt ist.

3. Geräteträger nach Anspruch 2, g e k e n n - z e i c h n e t   d u r c h   ein Lichtleiter-Endoskop als Bildübertragungsgerät.

4. Geräteträger nach Anspruch 2, g e k e n n - z e i c h n e t   d u r c h   eine Fernsehkamera als Bildübertragungsgerät.

5. Geräteträger nach einem der Ansprüche 1 bis 4, d a d u r c h   g e k e n n z e i c h n e t , daß ein Körperschall-, insbesondere Ultraschall-Positioniergerät, das zur Positionierung des Arbeitskopfes dient, auch zur Positionierung der Aufnahmekamera verwendet ist, wobei ein Körperschallsignale auf der einen Wandseite an der Stelle $(x_1, \varphi_1)$ erzeugender Schallsender und ein Schallempfänger auf der anderen Wandseite an der Stelle $(x_2, \varphi_2)$ vorgesehen sind und der Geräteträger bis zum Erreichen des maximalen Empfangssignals axial und in Umfangsrichtung verschoben wird, bei dem Sender und Empfänger einander gegenüberstehen und $x_1 = x_2$ sowie $\varphi_1 = \varphi_2$.

FIG 1

FIG 2

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 03 B 37/00 |
| A | FR-A-1 508 238 (COMMISSARIAT A L'ENERGIE ATOMIQUE) * Insgesamt * | 1,4 | G 21 C 17/00 |
| | --- | | |
| A,D | FR-A-2 264 303 (INFRA-VISION) * Anspruch 1 * | 1 | |
| | --- | | |
| A | FR-A-1 107 443 (LYTAX-WERKE) * Anspruch 1 * | 1 | |
| | --- | | |
| A | US-A-3 270 641 (GOSSELIN) * Abbildungen 1,6 * | 2,3 | |
| | ----- | | |

| RECHERCHIERTE SACHGEBIETE (Int. Cl. ³) |
|---|
| G 03 B 37/00 G 21 C 17/00 |

Der vorliegende Recherchenbericht wurde für alle Patentansprüche erstellt.

| Recherchenort DEN HAAG | Abschlußdatum der Recherche 11-01-1983 | Prüfer MEES G. |
|---|---|---|